# EUROPÄISCHE PATENTSCHRIFT

(11) **EP 2 796 744 B1**
(45) Veröffentlichungstag und Bekanntmachung des Hinweises auf die Patenterteilung: **27.09.2017**
(21) Anmeldenummer: 14001081.0
(22) Anmeldetag: 24.03.2014
(51) Int. Cl.: F16F 1/368

(54) **Blattfeder und Verfahren zur ihrer Herstellung**
Leaf spring and method for its production
Ressort à lame et son procédé de fabrication

(30) Priorität: 26.04.2013 DE 102013007230
(43) Veröffentlichungstag der Anmeldung: 29.10.2014
(73) Patentinhaber: IFC Composite GmbH, 39340 Haldensleben (DE)
(72) Erfinder: Voigt, Matthias, DE - 39343 Hohe Börde, OT Brumby (DE); Patzelt, Jürgen, DE - 39340 Haldensleben (DE)
(74) Vertreter: Lins, Edgar

(56) Entgegenhaltungen:
- EP-A1- 0 225 485
- WO-A1-2007/054067
- DE-A1-102010 050 065

## Beschreibung

Die Erfindung betrifft eine Blattfeder, deren Federkörper aus einer Vielzahl von aus Fasern gebildeten und zu einem Stapel mit einer Oberseite und einer Unterseite gestapelten Gelege- oder Gewebelagen in einer ausgehärteten Kunststoffmatrix gebildet ist, wobei sich die Dicke des Federkörpers aus der Anzahl der verpressten Gelege- oder Gewebelagen des Stapels ergibt und der Federkörper in Draufsicht auf die Oberseite des Stapels und der Federkörper in Draufsicht auf die Oberseite des Stapels in Richtung seiner Länge in einem Mittelbereich eine konstante Breite des Federkörpers und wenigstens ein verjüngtes Ende mit einer zu einer Stirnkante hin abnehmenden Breite des Federkörpers aufweist.

Die Erfindung betrifft ferner ein Verfahren zur Herstellung einer Blattfeder mit einem aus einer Vielzahl von aus Fasern gebildeten und zu einem Stapel mit einer Oberseite und einer Unterseite gestapelten Gelege- oder Gewebelagen in einer Kunststoffmatrix gebildeten Federkörper, dessen Dicke sich aus der Anzahl der verpressten Gelege- oder Gewebelagen ergibt und der in Draufsicht auf die Oberseite des Stapels in Richtung seiner Länge in einem Mittelbereich eine konstante Breite des Federkörpers und wenigstens ein verjüngtes Ende mit einer zu einer Stirnkante hin abnehmenden Breite des Federkörpers aufweist.

Derartige Komposit-Blattfedern haben für viele Anwendungsfälle die früher üblichen Blattfedern aus Stahl ersetzt und werden in erster Linie im Automobilbau eingesetzt. Der Federkörper der Blattfeder ist dabei üblicherweise mit verjüngten Enden ausgebildet, mit denen er an seinem Einsatzort befestigt ist.

Um eine derartige Form des Federkörpers zu produzieren, werden die Gelege- oder Gewebelagen, die regelmäßig als Prepregs ausgebildet sind, in die geeignete Form gestanzt und, beispielsweise mit 60 Gelege- oder Gewebelagen, übereinander gestapelt. Der so drapierte Stapel der Gelege- oder Gewebelagen wird erhitzt, und in einer Presse unter Druck auf die Höhe der Blattfeder gepresst. Durch die Erwärmung verflüssigt sich der Kunststoff der verwendeten Matrix, der üblicherweise ein duroplastischer Kunststoff ist und durch die Wärmeeinwirkung vernetzt, also aushärtet.

Während Gewebelagen durch senkrecht zueinander verlaufende Kett- und Schussfäden stabilisiert sind, bestehen die Gelegelagen aus Faden oder Fasern, die im Wesentlichen oder ausschließlich in eine Richtung orientiert sind.

Bei der beschriebenen Herstellungsweise fällt durch das Stanzen der Gelege- oder Gewebelagen ein merkbarer Anteil des Geleges oder Gewebes als Abfall an, der entsorgt werden muss. Dies ist umso problematischer, wenn Prepregs verwendet werden, weil die durch das Stanzen gebildeten Abfallstücke mit dem aushärtbaren Kunststoff beschichtet sind.

Durch EP 0 225 485 A1 und DE 10 2010 050 065 A1 ist es bekannt, Blattfedern mit einer in Draufsicht konstanten Breite herstellen, die an ihren Enden eine verringerte Dicke bzw. Höhe aufweisen. Dies ist ohne Weiteres dadurch möglich, dass die Gelege- oder Gewebelagen mit unterschiedlichen Längen entsprechend drapiert werden, sodass sich an den Enden eine geringere Dicke der Gelege- oder Gewebelagen ergibt als über die Länge gesehen in der Mitte. Dabei kann es vorteilhaft sein, zwischen den kürzeren Lagen immer wieder Lagen mit voller Länge einzufügen, um den Zusammenhalt der Lagen über die Länge der Blattfeder zu verbessern. Für die Herstellung einer eingangs erwähnten Blattfeder mit wenigstens einem durch die Verringerung der Breite verjüngten Ende kann diesen Schriften nicht entnommen werden.

Der Erfindung liegt daher die Problemstellung zugrunde, eine Blattfeder der eingangs erwähnten Art so auszubilden, dass sie rationeller gefertigt werden kann.

Zur Lösung dieser Aufgabe ist erfindungsgemäß eine Blattfeder der eingangs erwähnten Art dadurch gekennzeichnet, dass im verjüngten Ende die Anzahl der Gelege- oder Gewebelagen verringert ist, dass die Gelege- oder Gewebelagen auch im Bereich des verjüngten Endes des Federkörpers eine konstante Ausgangsbreite aufweisen und dass die Gelege- oder Gewebelagen im verjüngten Ende seitlich auf die verringerte Breite des Federkörpers unter Ausbildung von Wellen oder Falten zusammengedrückt sind.

Dementsprechend ist ein Verfahren der eingangs erwähnten Art gekennzeichnet durch die Verfahrensschritte
a) Stapeln von Gelege- oder Gewebelagen mit konstanter Breite, wobei im Bereich des verjüngten Endes des Federkörpers die Länge der Gelege- oder Gewebelagen variiert wird, sodass ein Teil der Gelege- oder Gewebelagen bereits im Bereich des verjüngten Endes des Federkörpers vor der Stirnkante endet,
b) seitliches Eindrücken der Gelege- oder Gewebelagen im Bereich des verjüngten Endes des Federkörpers und
c) Formhaltendes Aushärten der seitlich eingedrückten Gelege- oder Gewebelagen mit der Kunststoffmatrix.

Die erfindungsgemäß angestrebte rationellere Fertigung der Blattfeder erfolgt somit dadurch, dass Gelege- oder Gewebelagen konstanter Breite verwendet werden, die mit der vorgegebenen Breite produziert und beispielsweise von einer Vorratsrolle abgezogen und abgelängt werden können. Um den Gelege- oder Gewebeanteil proportional am verjüngten Ende zu verringern, ist erfindungsgemäß vorgesehen, dass die Gelege- oder Gewebelagen so drapiert werden, dass zahlreiche der Gelege- oder Gewebelagen kürzer ausgebildet sind, wodurch sie bereits vor der Stirnkante des Federkörpers enden. Anschließend werden die Gelege- oder Gewebelagen im Bereich des verjüngten Endes seitlich eingedrückt, beispielsweise mit entsprechend beweglichen Formkeilen, deren Anlageflächen an den Seitenkanten der Gelege- oder Gewebelagen den Seitenflächen des verjüngten Endes des Federkörpers entsprechen. Da die Gelege- oder Gewebelagen im Bereich des verjüngten Endes des Federkörpers seitlich eingedrückt werden, geben sie dem Druck durch eine gewellte oder gefaltete Ausbildung der einzelnen Lagen nach. Das Drapieren des Stapels der Gelege- oder Gewebelagen ist dabei zweckmäßigerweise so erfolgt, dass Platz für die gewellte Ausbildung dadurch gebildet ist, dass teilweise Gelege- oder Gewebelagen in diesem Bereich fehlen, weil sie kürzer ausgebildet sind, sodass der Platz für die gewellte Ausbildung der seitlich eingedrückten Lagen besteht. Im Idealfall befindet sich in jedem Hochschnitt senkrecht zur Längsrichtung des Federkörpers ein gleicher Anteil Gelege oder Gewebe über die jeweilige Breite des Federkörpers, wobei die Gelege- oder Gewebelagen nicht eben aufeinander geschichtet sind, sondern aufgrund des seitlichen Eindrückens an der betreffenden Stelle wellig verformt sind.

Erfindungsgemäß wird daher mit Gelege- oder Gewebelagen gearbeitet, die zu einem Stapel Lagen drapiert werden, dessen Kontur in Draufsicht nicht der Endform des Federkörpers entspricht, sondern erst durch seitliches Eindrücken der Lagen im Bereich des verjüngten Endes geformt wird, wobei sich die Lagen wellig verformen. Der bei einem rechteckigen Stapel aufgrund des seitlichen Eindrückens entstehende Materialüberschuss wird dadurch vermieden, dass die aufeinander gestapelten Gelege- oder Gewebelagen mit unterschiedlichen Längen aufeinander gestapelt werden, sodass nahe der Stirnkante, wo das seitliche Eindrücken die größte Amplitude aufweist, eine deutlich verringerte Anzahl von Gelege- oder Gewebelagen vorhanden ist, die zum Beginn der Verjüngung hin sukzessiv zunimmt, um so über die Fläche eines Hochschnittes einen im Wesentlichen konstanten Faseranteil im Federkörper zu realisieren. Der Faseranteil in Querschnitten des verjüngten Endes kann dabei dem Faseranteil im - unverformten - Mittelbereich des Federkörpers entsprechen.

In einer Ausführungsform der Erfindung ist die Dicke der Blattfeder über ihre Länge konstant, also auch im Bereich des verjüngten Endes gegenüber dem Mittelbereich unverändert.

Bevorzugt ist eine Ausbildung, bei der an Oberseite und Unterseite des Federkörpers Gelege- oder Gewebelagen in der vollen Länge des Federkörpers vorhanden sind. Die verkürzten Gelege- oder Gewebelagen zur Ausbildung des verjüngten Endes befinden sich somit in dem Stapel als mittlere Lagen. Vorzugsweise befinden sich in der Mitte des Stapels die kürzesten Lagen. Weiter bevorzugt ist es, wenn sich kürzere Lagen und Lagen voller Länge abwechselnd aufeinander gestapelt sind, wobei zwischen zwei Lagen voller Länge eine oder mehrere Lagen kürzerer Länge positioniert sein können oder zwischen zwei Lagen kürzerer Länge auch zwei oder mehrere Lagen voller Länge vorgesehen sein können.

In einer bevorzugten Ausführungsform sind die Gelege- oder Gewebelagen Prepregs, also Gelege- oder Gewebelagen, die mit einem aushärtenden Kunststoff bereits beschichtet sind.

Selbstverständlich kann die erfindungsgemäße Blattfeder auch in anderen Verfahren hergestellt werden, beispielsweise im RTM-Verfahren (Resin Transfer Molding), bei dem der Stapel der Lagen mit einer evakuierbaren Umhüllung versehen und der Matrixkunststoff vor dem Pressen in die Gewebelagen injiziert wird, bevor der Pressdruck mit der Aufheizung zum Aushärten einwirkt.

In einer bevorzugten Ausführungsform des erfindungsgemäßen Verfahrens werden die an den Enden konisch eingedrückten Gelege- oder Gewebelagen durch ein auf die Gelege- oder Gewebelagen aufgebrachtes Bindemittel in ihrer konischen Form fixiert, bevor die Endaushärtung vorgenommen wird. Es entsteht somit ein noch nicht abschließend geformtes Zwischenprodukt, das mit einer Endaushärtung in die endgültige gewünschte Form gebracht wird, insbesondere in eine konstante Dicke im Bereich des Endes.

Es ist ersichtlich, dass als Gelege- oder Gewebelagen alle für derartige Zwecke bekannte Fasern verwendbar sind, wie beispielsweise Glasfasern, Karbonfasern, Aramidfasern usw. Insbesondere können auch verschiedene Faserarten und Fasertypen miteinander kombiniert werden.

Die erfindungsgemäß hergestellte Blattfeder hat vorzugsweise in ihrem Arbeitsbereich der konisch verjüngten Enden eine konstante Dicke oder Höhe. Dies schließt allerdings nicht aus, dass die Blattfeder an einigen Stellen, beispielsweise an Lagerstellen, verdickt ausgebildet sein kann. Dies lässt sich ersichtlich durch zusätzliche Gelege- oder Gewebelagenstücke ohne Weiteres realisieren.

Die Erfindung soll im Folgenden anhand von in der Zeichnung dargestellten Ausführungsbeispielen näher erläutert werden. Es zeigen:
- Figur 1 -: einen Längsschnitt A-A durch erfindungsgemäß drapierte Gewebelagen für eine Blattfeder
- Figur 2 -: eine Draufsicht auf die gemäß Figur 1 drapierten Gewebelagen
- Figur 2a -: eine Draufsicht auf die vorgesehene Endform des Federkörpers
- Figur 3 -: eine schematische Draufsicht auf den Stapel mit den Gewebelagen, eingelegt in eine Pressform
- Figur 4 -: eine schematische Darstellung von eingefahrenen Werkzeugbacken, die die Gewebelagen seitlich eingedrückt haben, um das verjüngte Ende des Federkörpers auszubilden
- Figur 5 -: eine Seitenansicht des fertig gestellten Federkörpers
- Figur 6 -: eine schematische Darstellung eines Hochschnitts A-A durch einen Gewebestapel im Mittelbereich
- Figur 7 -: einen Hochschnitt B-B durch den drapierten Gewebestapel im Bereich des (später) verjüngten Endes
- Figur 8 -: einen Hochschnitt durch die Gewebelage im verjüngten Ende des Federkörpers nach dem seitlichen Pressen gemäß Figur 4
- Figur 9 -: einen Hochschnitt gemäß Figur 8 nach einem abschließenden Pressen in die Endform.

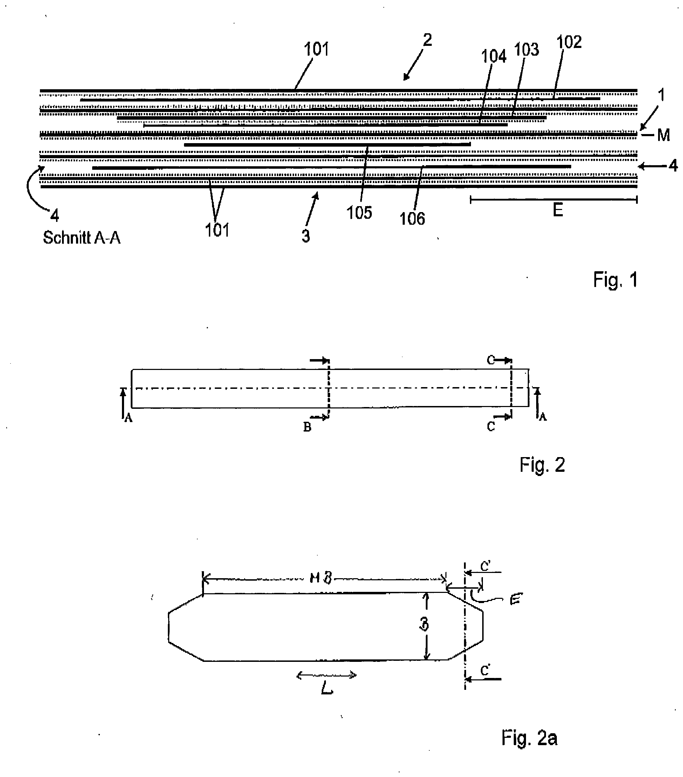

Das in Figur 1 dargestellte Schema der gestapelten Anordnung von Gewebelagen 1 (dargestellt in durchgezogenen Linien) lässt erkennen, dass auf einer Oberseite 2 und einer Unterseite 3 des Stapels jeweils mehrere Gewebelagen 101 angeordnet sind, die sich über die auf der Abszisse aufgetragene volle Länge eines aus den Gewebelagen 1 innerhalb einer Kunststoffmatrix gebildeten Federkörpers erstrecken. Mittig zwischen der Oberseite 2 und der Unterseite 3 befindet sich eine Mitte M des Federkörpers. Figur 1 lässt erkennen, dass sich zur Mitte M hin jeweils zwischen Gewebelagen 101 mit der vollen Länge Gewebelagen 102, 103, 104 usw. mit jeweils verringerter Länge angeordnet sind, wobei die Gewebelagen 102, 103, 104 ... mit verringerter Länge jeweils schrittweise in ihrer Länge abnehmen, sodass in der Mitte M eine kürzeste Gewebelage 105 angeordnet ist. Es ergibt sich somit ein Bereich E, in dem der Faseranteil in dem Stapel zu einer Stirnkante 4 hin kontinuierlich abnimmt. Zwischen den Gewebelagen 1 sind schematisch - in gestrichelter Form-Schichten eines Bindemittels 5 angedeutet. Das Bindemittel kann in beliebiger Weise in den Stapel eingebracht werden, beispielsweise durch eine Beschichtung auf den Gewebelagen 1.

Der gemäß Figur 1 gebildete Stapel an Gewebelagen 1 hat in Draufsicht eine in Figur 2 dargestellte rechteckige Kontur mit der Länge L und der Breite B.

Figur 2a zeigt in Draufsicht die angestrebte Form des Federkörpers, der über seine Länge L in einem Mittelbereich MB eine konstante Breite B aufweist. An den Mittelbereich MB schließen sich auf beiden Seiten der Länge L konisch verjüngte Enden an, die in dem Bereich E ausgebildet werden.

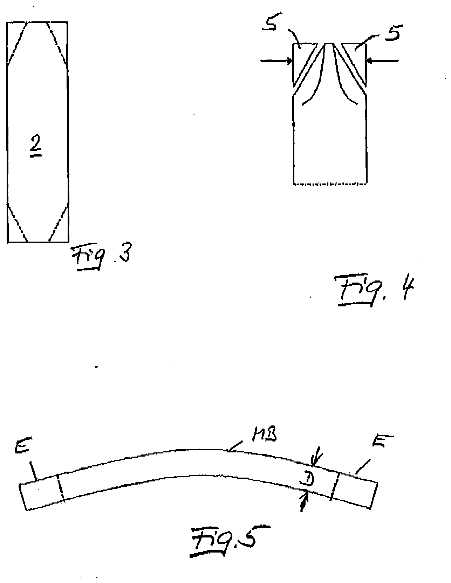

Figur 3 zeigt eine Draufsicht auf den Stapel gemäß Figur 1 und enthält schematisch mit gestrichelten Linien die angestrebte Endkontur des Federkörpers.

Figur 4 verdeutlicht schematisch, dass in einem Presswerkzeug seitlich verfahrbare keilförmige Werkzeugbacken vorgesehen sind, die den Stapel Gewebelagen 1 im Bereich E des Stapels Gewebelagen 1 seitlich zusammendrücken, wie dies in Figur 4 durch Pfeile angedeutet ist. Dadurch kommt es zunächst zu einer Aufwölbung der Gewebelagen, wie dies in Figur 4 angedeutet ist. In einem anschließenden Pressvorgang wird dann der Stapel mit der Kunststoffmatrix auf die angestrebte Dicke des Federkörpers gepresst, wodurch auch eine gewünschte Formgebung erfolgen kann, wie sie in Figur 5 angedeutet ist. Figur 5 lässt erkennen, dass der fertige Federkörper vorzugsweise eine konstante Dicke D aufweist, die sich aus der Anzahl der verpressten Gewebelagen 1 ergibt. Diese Dicke D setzt sich auch konstant in den Bereichen der konisch verjüngten Enden E fort.

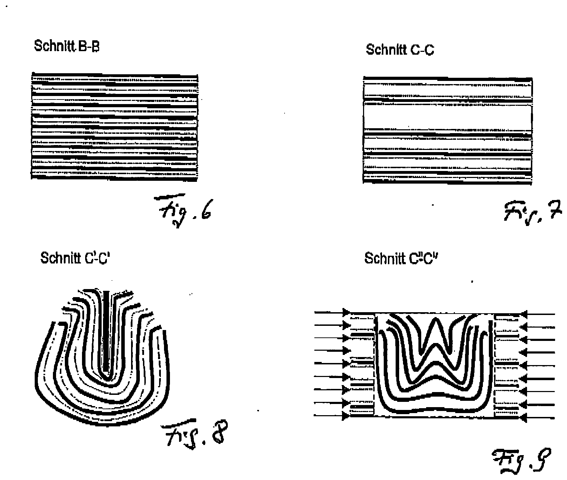

Figur 6 zeigt schematisch einen Hochschnitt A-A durch den Stapel der Gewebelagen 1 im Mittelbereich MB. Die hier als Prepregs ausgebildeten Gewebelagen sind mit dem als Binder 5 wirkenden Kunststoff beschichtet und liegen aufeinander. Figur 7 zeigt einen entsprechenden Hochschnitt B-B, der sich im Bereich E des verjüngten Endes befindet. Aufgrund der Verwendung von Gewebelagen 102 bis 106 mit verkürzten Längen, erstrecken sich nicht mehr alle Gewebelagen bis zu der Schnittebene B-B. Dies ist in Figur 7 schematisch durch eine verringerte Anzahl von Gewebelagen 1 dargestellt, die sich bis in die Schnittebene B-B erstrecken.

Figur 8 verdeutlicht die Situation nach der Ausbildung des verjüngten Endes E durch die Werkzeugbacken 5 und nach einem ersten Stabilisieren der Kontur durch das Bindemittel 5. Der Schnitt C'-C' im Bereich E des verjüngten Endes des Federkörpers verdeutlicht, dass die in diesem Bereich seitlich zusammengedrückten Gewebelagen wellig ineinander greifen und dadurch den Faservolumenanteil, wie er sich im Mittelbereich MB durch die gestapelten unverformten Gewebelagen 1 ausbildet, auch im Bereich E des verjüngten Endes sicherstellen.

In einem Ausführungsbeispiel beträgt der Faservolumenanteil im Federkörper 60 %, sodass 40 % des Volumens des Federkörpers durch die Kunststoffmatrix gebildet werden.

Aus produktionstechnischen Gründen ist es vorteilhaft, wenn die Formgebung gemäß Figur 4 so erfolgt, dass beispielsweise durch die Prepregs eine formstabile Vorformung erfolgt, dass aber die abschließende Aushärtung der Kunststoffmatrix in einem Endpresswerkzeug vorgenommen wird, in das ggf. im RTM-Verfahren auf die endgültige Matrix eingebracht wird.

Figur 9 verdeutlicht die Endform des Federkörpers im Bereich des Endes E mit einem rechteckigen Querschnitt (Schnitt C"-C").

Durch die erfindungsgemäße Maßnahme, das in Breitenrichtung B verjüngte Ende E mit Gewebelagen 1 zu erstellen, die eine konstante Breite haben, also nicht in eine Trapezform ausgestanzt werden müssen, lässt sich eine erhebliche Einsparung des Prepreg-Gewebes erzielen, da das erfindungsgemäße Verfahren verschnittfrei arbeitet, wenn das Gewebe, beispielsweise Prepreg-Gewebe, bereits in der benötigten Breite B produziert und beispielsweise auf Rollen gewickelt geliefert wird. Die erfindungsgemäße Ausbildung der Blattfeder ermöglicht so deutliche Materialeinsparungen.

## Patentansprüche

1. Blattfeder, deren Federkörper aus einer Vielzahl von aus Fasern gebildeten und zu einem Stapel mit einer Oberseite (2) und einer Unterseite (3) gestapelten Gelege- oder Gewebelagen (1) in einer ausgehärteten Kunststoffmatrix gebildet ist, wobei sich die Dicke (D) des Federkörpers aus der Anzahl der verpressten Gelege- oder Gewebelagen (1) des Stapels ergibt und der Federkörper in Draufsicht auf die Oberseite (2) des Stapels in Richtung seiner Länge (L) in einem Mittelbereich (MB) eine konstante Breite (B) des Federkörpers und wenigstens ein verjüngtes Ende (E) mit einer zu einer Stirnkante (4) hin abnehmenden Breite des Federkörpers aufweist, wobei im verjüngten Ende (E) die Anzahl der Gelege- oder Gewebelagen (1) verringert ist, wobei die Gelege- oder Gewebelagen (1) auch im Bereich des verjüngten Endes (E) des Federkörpers eine konstante Ausgangsbreite (B) aufweisen und wobei die Gelege- oder Gewebelagen (1) im verjüngten Ende (E) seitlich auf die verringerte Breite des Federkörpers unter Ausbildung von Wellen oder Falten zusammengedrückt sind.

2. Blattfeder nach Anspruch 1, **dadurch gekennzeichnet, dass** der Faseranteil über die Breite des verjüngten Endes (E) des Federkörpers dem Faseranteil im Mittelbereich (MB) entspricht.

3. Blattfeder nach Anspruch 1 oder 2, **dadurch gekennzeichnet, dass** die Dicke (D) der Blattfeder am verjüngten Ende der Dicke in einem Arbeitsbereich der Blattfeder entspricht.

4. Blattfeder nach einem der Ansprüche 1 bis 3, **dadurch gekennzeichnet, dass** an der Oberseite (2) und der Unterseite (3) des Federkörpers Gelege- oder Gewebelagen (101) in der vollen Länge (L) des Federkörpers vorhanden sind.

5. Verfahren zur Herstellung einer Blattfeder mit einem aus einer Vielzahl von aus Fasern gebildeten und zu einem Stapel mit einer Oberseite (2) und einer Unterseite (3) gestapelten Gelege- oder Gewebelagen (1) in einer Kunststoffmatrix gebildeten Federkörper, dessen Dicke (D) sich aus der Anzahl der verpressten Gelege- oder Gewebelagen (1) ergibt und der in Draufsicht auf die Oberseite (2) des Stapels in Richtung seiner Länge (L) in einem Mittelbereich (MB) eine konstante Breite (B) des Federkörpers und wenigstens ein verjüngtes Ende (E) mit einer zu einer Stirnkante (4) hin abnehmenden Breite des Federkörpers aufweist, umfassend die Verfahrensschritte
a) Stapeln von Gelege- oder Gewebelagen (1) mit konstanter Breite (B), wobei im Bereich des verjüngten Endes (E) des Federkörpers die Länge der Gelege- oder Gewebelagen (1) variiert wird, sodass ein Teil der Gelege- oder Gewebelagen bereits im Bereich des verjüngten Endes (E) des Federkörpers vor der Stirnkante (4) endet,
b) seitliches Eindrücken der Gelege- oder Gewebelagen (1) im Bereich des verjüngten Endes (E) des Federkörpers und
c) Formhaltendes Aushärten der seitlich eingedrückten Gelege- oder Gewebelagen (1) mit der Kunststoffmatrix.

6. Verfahren nach Anspruch 5, **dadurch gekennzeichnet, dass** die Reduzierung des Anteils der Gelege- oder Gewebelagen (1) im Bereich des verjüngten Endes (E) durch verkürzte Gelege- oder Gewebelagen (102 bis 116) der Reduzierung des Volumens des Federkörpers durch das verjüngte Ende (E) des Federkörpers entspricht.

7. Verfahren nach Anspruch 6, **dadurch gekennzeichnet, dass** die Reduzierung des Anteils der Gelege- oder Gewebelagen (1) im Bereich des verjüngten Endes (E) des Federkörpers durch verkürzte Gelege- oder Gewebelagen (102 bis 116) der Reduzierung des Volumens des Federkörpers durch das verjüngte Ende jeweils pro Querschnittsabschnitt entspricht.

8. Verfahren nach einem der Ansprüche 5 bis 7, **dadurch gekennzeichnet, dass** an der Oberseite (2) und Unterseite (3) des Federkörpers Gelege- oder Gewebelagen (101) in der vollen Länge (L) des Federkörpers eingesetzt werden.

9. Verfahren nach einem der Ansprüche 5 bis 8, **dadurch gekennzeichnet, dass** als Gelege- oder Gewebelagen (1) Prepregs verwendet werden.

10. Verfahren nach einem der Ansprüche 5 bis 9, **dadurch gekennzeichnet, dass** abwechselnd Gelege- oder Gewebelagen (101) mit voller Länge und Gelege- oder Gewebelagen (102 bis 106) mit verkürzter Länge gestapelt werden, wobei die Länge der Gelege- oder Gewebelagen (102 bis 106) mit verkürzter Länge zur Mitte (M) des Stapels hin abnimmt.

## Claims

1. Leaf spring, the spring body thereof being formed from non-woven or woven-fabric layers (1) that are formed from a multiplicity of fibres and are stacked so as to form a stack having an upper side (2) and a lower side (3) in a cured plastics matrix, wherein the thickness (D) of the spring body is the result of the number of compressed non-woven or woven-fabric layers (1) of the stack, and the spring body in a plan view of the upper side (2) of the stack in the direction of the length (L) of said spring body in a central region (MB) has a constant width (B) of the spring body and at least one tapered end (E) having a width of the spring body that is reduced towards an end edge (4), wherein the number of non-woven or woven-fabric layers (1) is reduced in the tapered end (E), wherein the non-woven or woven-fabric layers (1) have a constant initial width (B) also in the region of the tapered end (E) of the spring body, and wherein the non-woven or woven-fabric layers (1) in the tapered end (E), while forming undulations or folds, laterally are compressed to the reduced width of the spring body.

2. Leaf spring according to Claim 1, **characterized in that** the proportion of fibres across the width of the tapered end (E) of the spring body corresponds to the proportion of fibres in the central region (MB).

3. Leaf spring according to Claim 1 or 2, **characterized in that** the thickness (D) of the leaf spring at the tapered end corresponds to the thickness in an operating region of the leaf spring.

4. Leaf spring according to one of Claims 1 to 3, **characterized in that** non-woven or woven-fabric layers (101) in the full length (L) of the spring body are present on the upper side (2) and the lower side (3) of the spring body.

5. Method for producing a leaf spring having a spring body that is formed from non-woven or woven-fabric layers (1) that are formed from a multiplicity of fibres and are stacked so as to form a stack having an upper side (2) and a lower side (3) in a plastics matrix, wherein the thickness (D) of the spring body is the result of the number of compressed non-woven or woven-fabric layers (1), and said spring body in a plan view of the upper side (2) of the stack in the direction of the length (L) of said spring body in a central region (MB) has a constant width (B) of the spring body and at least one tapered end (E) having a width of the spring body that is reduced towards an end edge (4), said method comprising the following method steps:
a) stacking non-woven or woven-fabric layers (1) having a constant width (B), wherein the length of the non-woven or woven-fabric layers (1) in the region of the tapered end (E) of the spring body is varied such that a part of the non-woven or woven-fabric layers terminates already in the region of the tapered end (E) of the spring body, ahead of the end edge (4);
b) laterally compressing the non-woven or woven-fabric layers (1) in the region of the tapered end (E) of the spring body; and
c) shape-preserving curing of the laterally compressed non-woven or woven-fabric layers (1) conjointly with the plastics matrix.

6. Method according to Claim 5, **characterized in that** the reduction in the proportion of non-woven or woven-fabric layers (1) in the region of the tapered end (E) by way of shortened non-woven or woven-fabric layers (102 to 116) corresponds to the reduction in the volume of the spring body by way of the tapered end (E) of the spring body.

7. Method according to Claim 6, **characterized in that** the reduction in the proportion of the non-woven or woven-fabric layers (1) in the region of the tapered end (E) of the spring body by way of shortened non-woven or woven-fabric layers (102 to 116) corresponds to the reduction in the volume of the spring body by way of the tapered end in each cross-sectional portion.

8. Method according to one of Claims 5 to 7, **characterized in that** non-woven or woven-fabric layers (101) having the full length (L) of the spring body are used on the upper side (2) and the lower side (3) of the spring body.

9. Method according to one of Claims 5 to 8, **characterized in that** prepregs are used as non-woven or woven-fabric layers (1).

10. Method according to one of Claims 5 to 9, **characterized in that** non-woven or woven-fabric layers (101) having the full length and non-woven or woven-fabric layers (102 to 106) having a shortened length are stacked in an alternating manner, wherein the length of the non-woven or woven-fabric layers (102 to 106) having the shortened length is reduced towards the centre (M) of the stack.

## Revendications

1. Ressort à lame, dont le corps de ressort est formé d'une multitude de couches de non-tissé ou de tissu (1) constituées de fibres et empilées en une pile ayant une face supérieure (2) et une face inférieure (3), dans une matrice de matière plastique durcie, l'épaisseur (D) du corps de ressort résultant du nombre de couches de non-tissé ou de tissu (1) pressées de la pile et le corps de ressort présentant, en vue de dessus sur la face supérieure (2) de la pile, en direction de sa longueur (L), dans une zone centrale (MB), une largeur constante (B) du corps de ressort et au moins une extrémité rétrécie (E) avec une largeur du corps de ressort qui diminue vers une arête frontale (4),
dans lequel
dans l'extrémité rétrécie (E), le nombre de couches de non-tissé ou de tissu (1) est réduit,
les couches de non-tissé ou de tissu (1) présentent une largeur de départ constante (B) même dans la zone de l'extrémité rétrécie (E) du corps de ressort, et
les couches de non-tissé ou de tissu (1) dans l'extrémité rétrécie (E) sont comprimées latéralement jusqu'à la largeur réduite du corps de ressort en réalisant des ondulations ou des plis.

2. Ressort à lame selon la revendication 1,
**caractérisé en ce que**
la part de fibres sur la largeur de l'extrémité rétrécie (E) du corps de ressort correspond à la part de fibres dans la zone centrale (MB).

3. Ressort à lame selon la revendication 1 ou 2,
**caractérisé en ce que**
l'épaisseur (D) du Ressort à lame à l'extrémité rétrécie correspond à l'épaisseur dans une zone de travail du Ressort à lame.

4. Ressort à lame selon l'une des revendications 1 à 3,
**caractérisé en ce que**
sur la face supérieure (2) et sur la face inférieure (3) du corps de ressort, il existe des couches de non-tissé ou de tissu (101) sur toute la longueur (L) du corps de ressort.

5. Procédé de fabrication d'un Ressort à lame, comportant un corps de ressort formé d'une multitude de couches de non-tissé ou de tissu (1) constituées de fibres et empilées en une pile ayant une face supérieure (2) et une face inférieure (3), dans une matrice de matière plastique, dont l'épaisseur (D) résulte du nombre de couches de non-tissé ou de tissu (1) pressées et qui, en vue de dessus sur la face supérieure (2) de la pile, en direction de sa longueur (L), dans une zone centrale (MB), présente une largeur constante (B) du corps de ressort et au moins une extrémité rétrécie (E) avec une largeur du corps de ressort qui diminue vers une arête frontale (4),
comprenant les étapes de procédé suivantes consistant à
a) empiler des couches de non-tissé ou de tissu (1) ayant une largeur constante (B), la longueur des couches de non-tissé ou de tissu (1) variant dans la zone de l'extrémité rétrécie (E) du corps de ressort, de telle sorte qu'une partie des couches de non-tissé ou de tissu se termine déjà dans la zone de l'extrémité rétrécie (E) du corps de ressort en avant de l'arête frontale (4),
b) enfoncer latéralement les couches de non-tissé ou de tissu (1) dans la zone de l'extrémité rétrécie (E) du corps de ressort, et
c) durcir en conservant la forme des couches de non-tissé ou de tissu (1) enfoncées latéralement avec la matrice de matière plastique.

6. Procédé selon la revendication 5, **caractérisé en ce que** la réduction de la part de couches de non-tissé ou de tissu (1) dans la zone de l'extrémité rétrécie (E) par des couches de non-tissé ou de tissu raccourcies (102 à 116) correspond à la réduction du volume du corps de ressort par l'extrémité rétrécie (E) du corps de ressort.

7. Procédé selon la revendication 6, **caractérisé en ce que** la réduction de la part de couches de non-tissé ou de tissu (1) dans la zone de l'extrémité rétrécie (E) du corps de ressort par des couches de non-tissé ou de tissu raccourcies (102 à 116) correspond à la réduction du volume du corps de ressort par l'extrémité rétrécie respectivement par portion de section transversale.

8. Procédé selon l'une des revendications 5 à 7, **caractérisé en ce que** sur la face supérieure (2) et sur la face inférieure (3) du corps de ressort, on met en place des couches de non-tissé ou de tissu (101) dans toute la longueur (L) du corps de ressort.

9. Procédé selon l'une des revendications 5 à 8, **caractérisé en ce que** l'on utilise des pré-imprégnés en tant que couches de non-tissé ou de tissu (1).

10. Procédé selon l'une des revendications 5 à 9, **caractérisé en ce que** l'on empile en alternance des couches de non-tissé ou de tissu (101) sur toute la longueur et des couches de non-tissé ou de tissu (102 à 106) à longueur raccourcie, la longueur des couches de non-tissé ou de tissu (102 à 106) à longueur raccourcie diminuant vers le centre (M) de la pile.
